# EUROPÄISCHE PATENTSCHRIFT

(11) **EP 3 222 008 B1**
(45) Veröffentlichungstag und Bekanntmachung des Hinweises auf die Patenterteilung: **08.07.2020**
(21) Anmeldenummer: 15790871.6
(22) Anmeldetag: 28.10.2015
(51) Int. Cl.: H04L 12/40, H04L 25/02

(54) **TEILNEHMERSTATION FÜR EIN BUSSYSTEM UND EIN VERFAHREN ZUM REGELN EINES SENDESIGNALS FÜR EIN BUSSYSTEM**
SUBSCRIBER STATION FOR A BUS SYSTEM, AND METHOD FOR ADJUSTING A TRANSMIT SIGNAL FOR A BUS SYSTEM
STATION D'ABONNÉ POUR UN SYSTÈME DE BUS ET PROCÉDÉ SERVANT À RÉGLER UN SIGNAL D'ÉMISSION POUR UN SYSTÈME DE BUS

(30) Priorität: 21.11.2014 DE 102014223840
(43) Veröffentlichungstag der Anmeldung: 27.09.2017
(73) Patentinhaber: Robert Bosch GmbH, 70442 Stuttgart (DE)
(72) Erfinder: WALKER, Steffen, 72770 Reutlingen (DE); HEHEMANN, Ingo, 49170 Hagen A.T.W (DE)
(86) Internationale Anmeldenummer: PCT/EP2015/074991
(87) Internationale Veröffentlichungsnummer: WO 2016/078883

(56) Entgegenhaltungen:
- WO-A1-2011/057023
- US-A1- 2009 267 814
- SCHROTER PHILIPP ET AL: "EMC compliant LIN transceiver", 2013 PROCEEDINGS OF THE ESSCIRC (ESSCIRC), IEEE, 16. September 2013 (2013-09-16), Seiten 363-366, XP032518992, ISSN: 1930-8833, DOI: 10.1109/ESSCIRC.2013.6649148 ISBN: 978-1-4799-0643-7 [gefunden am 2013-10-28]

## Beschreibung

### Technisches Gebiet

Die vorliegende Erfindung betrifft eine Teilnehmerstation für ein Bussystem und ein Verfahren zum Regeln eines Sendesignals für ein Bussystem, mit welchen die Emission reduziert wird und trotzdem die Timing-Anforderungen des Bussystems erfüllt werden können.

### Stand der Technik

### Offenbarung der Erfindung

Ein Local Interconnect Network (LIN), das auch als LIN-Bus bekannt ist, wird beispielsweise in einem Fahrzeug zur kostengünstigen Kommunikation zwischen intelligenten Sensoren und Aktoren insbesondere in einer Fahrzeugtür oder einem Fahrzeugsitz verwendet. Der LIN-Bus basiert auf einem Eindraht-Bus und ist als serielles Kommunikationssystem spezifiziert. Der LIN-Bus ist den Feldbussen zugeordnet und wird oft mit einem CAN-Bus kombiniert. Über einen LIN-Master können LIN-Slaves auch von dem CAN-Bus bzw. CAN-Bussystem erreichbar sein. Beim CAN-Bussystem werden Nachrichten mittels des CAN-Protokolls übertragen, wie es in der CAN-Spezifikation in der ISO11898 beschrieben ist.

Die Anforderungen an eine LIN-Sende-/Empfangseinrichtung, die auch LIN-Transceiver genannt wird, sind,
- Einhaltung der funktionalen Parameter, wie ausreichendes Timing der Flanken und Periodizität,
- Emission,
- Direct Power Injection (DPI), was ein Verfahren zur Störfestigkeitsmessung im Bereich der elektromagnetischen Verträglichkeit (EMV) gemäß der Norm IEC 62132-4 ist, und
- Elektrostatische Entladung (ESD = Electrostatic Discharge).

Die Anforderungen stehen im Widerspruch zueinander, so dass ein LIN-Transceiver häufig einige der Anforderungen nicht erfüllt und dann ein Kompromiss gesucht werden muss, um die an den LIN-Transceiver gestellten Anforderungen zu erfüllen. Dies trifft insbesondere auf die Anforderungen der Funktion Timing und der Emission zu.

Die derzeitige LIN-Spezifikation 2.2 fordert Timings, die nur erreichbar sind, wenn das Design des LIN-Transceivers für eine entsprechende Flankensteilheit ausgelegt wird, die beim Schaltvorgang von rezessiv zu dominant und umgekehrt vorliegt.

Die leitungsgebundene Emission von LIN-Transceivern wird gemessen entsprechend der 150 Ohm-Methode gemäß der IEC 61967-4, Integrated circuits, Measurement of electromagnetic emissions, 150 kHz to GHz - Part 4: Measurement of conducted emissions - 1/150 direct coupling method. Bei der Emissionsmessung wird ein heruntergeteiltes Wechselsignal (AC-Signal) der LIN-Busleitung bewertet. Mittels Spektrum-Analysator wird am Auskoppelungspunkt das Frequenzspektrum gemessen.

Ein häufiges Problem bei aktuellen Projekten liegt darin, dass bei Erfüllen der Timing-Anforderung durch einen Designstand in der Regel Grenzüberschreitungen bei Emission auftreten. Derzeit sind sehr viele Redesignschritte notwendig, um einen Stand zu erreichen, welcher alle Anforderungen erfüllt. Nachteilig daran ist, dass Redesignschritte zeit- und kostenintensiv sind, da ein neuer Maskensatz geschrieben werden muss. Aktuell ist es erforderlich, sich über aufwändige und teure Redesigns des LIN-Transceivers schrittweise an die Erfüllung aller Anforderungen heranzutasten.

Schroter Philipp et al.: EMC compliant LIN transceiver", 2013 PROCEEDINGS OF THE ESSCIRC (ESSCIRC), IEEE, 16. September 2013 (2013-09-16), Seiten 363 - 366, ISSN 1930-8833, DOI:10.1109/ESSCIRC.2013.6649148 ISBN 978-1-4799-0643-7 zeigt einen LIN Transceiver, der für eine erhöhte Robustheit gegen elektromagnetische Störungen redesigned bzw. ausgestaltet ist.

Ferner wird der ermittelte optimale Kompromiss stark von der externen Beschaltung und parasitären Effekten beeinflusst. Noch dazu werden teilweise im Serienstand nicht alle an den LIN-Transceiver gestellten Forderungen erfüllt, was zur Unzufriedenheit auf Seiten des Nutzers des LIN-Transceivers bzw. der LIN-Teilnehmerstation und damit des LIN-Bussystems führt.

Daher ist es Aufgabe der vorliegenden Erfindung, eine Teilnehmerstation für ein Bussystem und ein Verfahren zum Regeln eines Sendesignals für ein Bussystem bereitzustellen, welche die zuvor genannten Probleme lösen. Insbesondere sollen eine Teilnehmerstation für ein Bussystem und ein Verfahren zum Regeln eines Sendesignals für ein Bussystem bereitgestellt werden, bei welchen aufwändige Redesignschritte zur Erfüllung sowohl der Anforderungen in Bezug auf Timing als auch der Anforderungen in Bezug auf Emission entfallen und auf Änderungen der Beschaltung reagiert werden kann, so dass die genannten Anforderungen auf einfache und kostengünstige Weise eingehalten werden können.

Die Aufgabe wird durch eine Teilnehmerstation für ein Bussystem mit den Merkmalen des Anspruchs 1 gelöst.

Mit der Teilnehmerstation sind keine aufwändigen Redesignschritte mehr erforderlich, um sowohl die Anforderungen in Bezug auf das Timing von Flanken des Bussystems und als auch die Anforderungen in Bezug auf Emission der Teilnehmerstation und/oder des Bussystems zu erfüllen. Dadurch können Entwicklungskosten auf dem Weg zur Erfüllung der Anforderungen eingespart werden, so dass die genannten Anforderungen auf einfache und kostengünstige Weise eingehalten werden können.

Bei der Teilnehmerstation ist das Design der Sende-/Empfangseinrichtung oder der Kommunikationssteuereinrichtung so ausgelegt, dass die Flanken des Sendesignals eine gewisse Steilheit nicht überschreiten. Dadurch werden die durch die LIN-Spezifikation 2.2 festgelegten Grenzwerte nicht verletzt. Zudem ist neben der Flankensteilheit auch die Form der LIN-Flanken mit berücksichtigt, um als weitere Einflussgröße die Emission zu reduzieren.

Ein weiterer Vorteil besteht darin, dass sich die Teilnehmerstation mit dem von ihr durchgeführten Verfahren an die jeweiligen Anwendungsbedingungen anpasst, die unterschiedliche Busparameter zu Folge haben. Dies ist vor allem für Originalteilhersteller (OEM = Original Equipment Manufacturer), wie beispielsweise im Bereich des Fahrzeugbaus, ein großer Vorteil.

Noch dazu eliminiert die Teilnehmerstation mit dem von ihr durchgeführten Verfahren die Abhängigkeit von den Toleranzen des Halbleiterprozesses.

Vorteilhaft ist auch, dass die Teilnehmerstation mit dem von ihr durchgeführten Verfahren die Abhängigkeit von den Umgebungsbedingungen, wie Variation der Versorgungsspannung und der Temperatur, eliminiert. Damit können bei den elektrischen Eigenschaften (Electrical Characteristics) engere Toleranzen eingehalten werden.

Vorteilhafte weitere Ausgestaltungen der Teilnehmerstation sind in den abhängigen Ansprüchen beschrieben.

Vorzugsweise umfasst die Teilnehmerstation zudem eine Sende-/Empfangseinrichtung zum Senden und/oder Empfangen von Nachrichten, wobei die Erfassungseinheit ausgestaltet ist, die Störung und die Flankensteilheit zu erfassen, während die Sende-/Empfangseinrichtung eine Nachricht sendet.

Es ist möglich, dass die erste Erfassungseinheit eine Koppelkapazität auf einem Bus des Bussystems aufweist, um die Störung zu erfassen.

Bei der Teilnehmerstation kann die erste Erfassungseinheit zudem ausgestaltet sein, nach Erfassung einer Störung, die erfasste Störung zu verstärken, die verstärkte Störung zu integrieren oder eine Amplitudenerfassung der verstärkten Störung vorzunehmen.

Möglicherweise ist die zweite Erfassungseinheit als Komparator mit zwei Komparatorschwellen zum Prüfen, ob die Flankensteilheit einem vorbestimmten Wert entspricht, ausgestaltet.

Die Teilnehmerstation kann zum Senden und/oder Empfangen von Nachrichten gemäß dem LIN-Standard ausgestaltet sein.

Es ist auch denkbar, dass die Teilnehmerstation zudem eine Kommunikationssteuereinrichtung zum Erstellen oder Lesen einer Nachricht für eine oder von einer weiteren Teilnehmerstation des Bussystems aufweist. Hierbei können die erste und zweite Erfassungseinheit und/oder die Regeleinheit Teil der Kommunikationssteuereinrichtung oder Teil der Sende-/Empfangseinrichtung sein.

Die zuvor beschriebene Teilnehmerstation kann Teil eines LIN-Bussystems sein, das einen Bus, und eine erste Teilnehmerstation als Master und mindestens zwei zweite Teilnehmerstationen als Slave aufweist, welche über den Bus derart miteinander verbunden sind, dass sie miteinander kommunizieren können. Zudem ist die erste Teilnehmerstation und die mindestens eine zweite Teilnehmerstation eine zuvor beschriebene Teilnehmerstation.

Die zuvor genannte Aufgabe wird zudem durch ein Verfahren zum Regeln eines Sendesignals für ein Bussystem mit den Merkmalen des Anspruchs 10 gelöst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Blockschaltbild einer Teilnehmerstation des Bussystems gemäß dem ersten Ausführungsbeispiel;
Fig. 3 ein vereinfachtes Blockschaltbild einer Sende-/Empfangseinrichtung des Bussystems gemäß dem ersten Ausführungsbeispiel;
Fig. 4 ein vereinfachtes Blockschaltbild einer Erfassungseinheit des Bussystems gemäß dem ersten Ausführungsbeispiel;
Fig. 5 ein Diagramm für Grenzwerte bei einer Emissionsmessung mit einer ersten Erfassungseinheit gemäß dem ersten Ausführungsbeispiel;
Fig. 6 ein Zeitverlaufsdiagramm für einen Übergang eines Sendesignals für das Bussystem vom rezessiven zum dominanten Pegel und Fig. 7 das daraus resultierende Bussignal gemäß dem ersten Ausführungsbeispiel;
Fig. 8 ein Zeitverlaufsdiagramm für das Bussignal des Bussystems zur Veranschaulichung einer Regelung der Flankensteilheit gemäß dem ersten Ausführungsbeispiel;
Fig. 9 ein Zeitverlaufsdiagramm für das Bussignal des Bussystems zur Veranschaulichung einer Regelung der Flankenform gemäß dem ersten Ausführungsbeispiel; und
Fig. 10 ein Blockschaltbild einer Teilnehmerstation des Bussystems gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

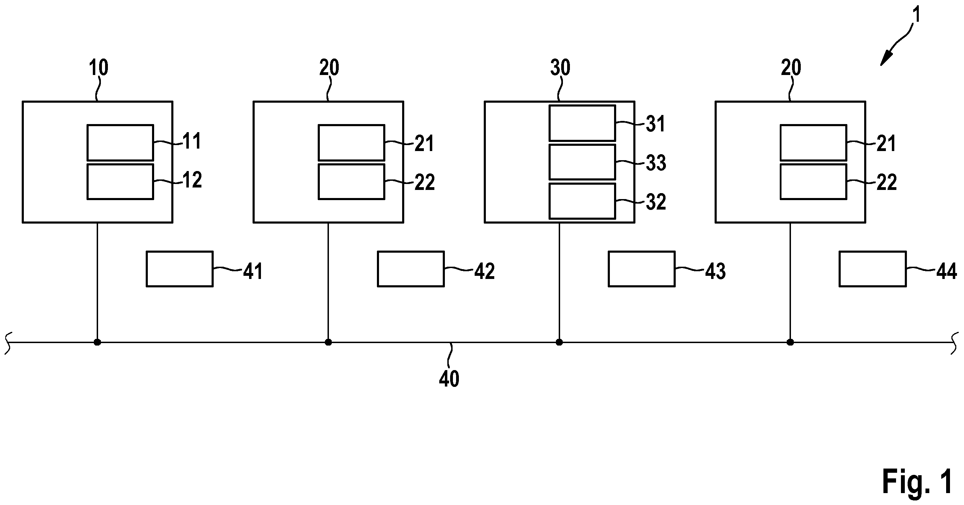

Fig. 1 zeigt ein Bussystem 1, das beispielsweise ein LIN-Bussystem sein kann. Das Bussystem 1 kann in einem Fahrzeug, insbesondere einem Kraftfahrzeug, einem Flugzeug, usw., oder im Krankenhaus usw. Verwendung finden. Insbesondere kann das Bussystem 1 bei Ausführung als LIN-Bussystem zur Kommunikation zwischen elektrischen Komponenten, wie Sensoren, Aktoren, usw., eines Fahrzeugsitzes oder einer Fahrzeugtür zu Einsatz kommen.

In Fig. 1 hat das Bussystem 1 eine Vielzahl von Teilnehmerstationen 10, 20, 30, die jeweils an einen Bus 40 angeschlossen sind. Über den Bus 40 können Nachrichten 41, 42, 43 in der Form von Signalen zwischen den einzelnen Teilnehmerstationen 10, 20, 30 übertragen werden. Im Fall eines LIN-Bussystems als Bussystem 1 kann die Teilnehmerstation 10 ein LIN-Master sein, wohingegen die Teilnehmerstationen 20, 30 jeweils LIN-Slaves bilden, welche dem LIN-Master steuerungsmäßig untergeordnet sind.

Wie in Fig. 1 gezeigt, hat die Teilnehmerstationen 10 eine Kommunikationssteuereinrichtung 11 und eine Sende-/Empfangseinrichtung 12. Die Teilnehmerstationen 20 haben jeweils eine Kommunikationssteuereinrichtung 21 und eine Sende-/Empfangseinrichtung 22. Die Teilnehmerstation 30 hat dagegen eine Kommunikationssteuereinrichtung 31, eine Sende-/Empfangseinrichtung 32 und eine Einrichtung 33. Die Sende-/Empfangseinrichtung 12 der Teilnehmerstation 10, die Sende-/Empfangseinrichtungen 22 der Teilnehmerstationen 20 und die Sende-/Empfangseinrichtung 32 der Teilnehmerstation 30 sind jeweils direkt an den Bus 40 angeschlossen, auch wenn dies in Fig. 1 nicht dargestellt ist.

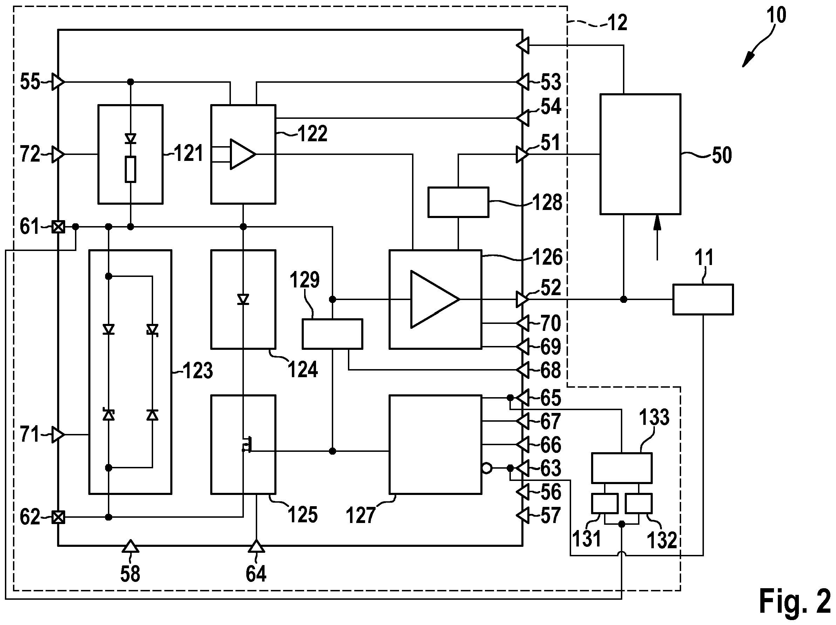

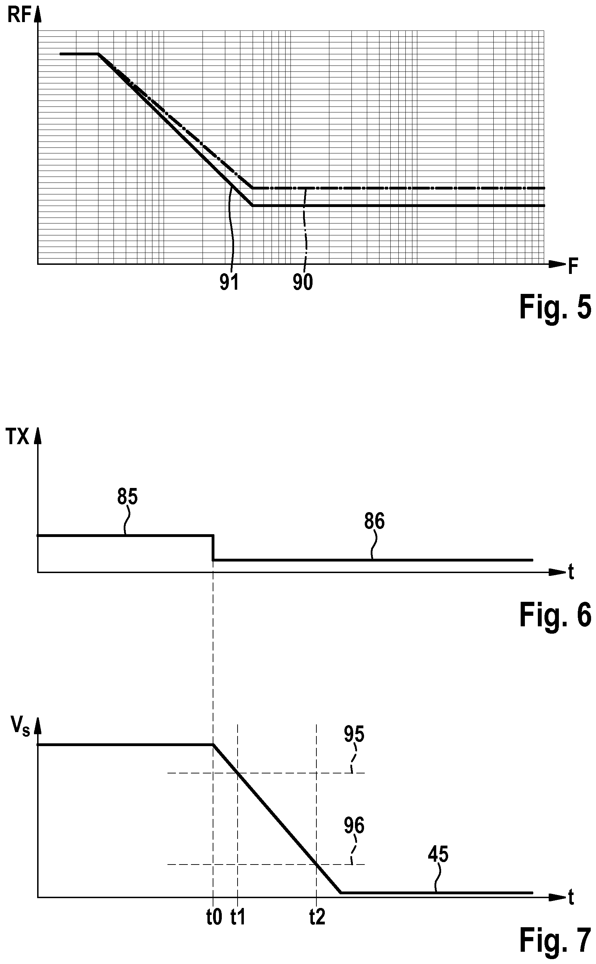

Die Kommunikationssteuereinrichtung 11 dient zur Steuerung einer Kommunikation der Teilnehmerstation 10 über den Bus 40 mit einer oder mehreren anderen der Teilnehmerstationen 20, 30. Die Sende-/Empfangseinrichtung 12 dient zum Senden einer Nachricht 41 in Form von Signalen und zum Regeln eines Sendesignals TX (vgl. Fig. 6) für das Bussystem 1, um die Anforderungen in Bezug auf Emission und Timing zu erfüllen, wie später in Bezug auf Fig. 2 bis Fig. 9 noch ausführlicher beschrieben. Die Kommunikationssteuereinrichtung 11 kann wie ein herkömmlicher LIN-Controller für einen LIN-Master ausgeführt sein.

Die Kommunikationssteuereinrichtung 21 dient zur Steuerung einer Kommunikation einer Teilnehmerstation 20 über den Bus 40 mit der Teilnehmerstation 10. Die Sende-/Empfangseinrichtung 22 dient zum Senden einer Nachricht 42 oder 44 in Form von Signalen an die oder Empfangen einer Nachricht 41 in Form von Signalen von der Teilnehmerstation 10. Zudem dient die Sende-/Empfangseinrichtung 22 zum Regeln des Sendesignals TX (vgl. Fig. 6) für das Bussystem 1, um die Anforderungen in Bezug auf Emission und Timing zu erfüllen, wie zuvor bereits erwähnt und später noch ausführlicher beschrieben. Die Kommunikationssteuereinrichtung 21 kann wie ein herkömmlicher LIN-Controller für einen LIN-Slave ausgeführt sein.

Die Kommunikationssteuereinrichtung 31 dient zur Steuerung einer Kommunikation der Teilnehmerstation 30 über den Bus 40 mit der Teilnehmerstation 10. Die Sende-/Empfangseinrichtung 32 dient zum Senden einer Nachricht 43 an die oder Empfangen einer Nachricht 41 von der Teilnehmerstation 10. Die Sende-/Empfangseinrichtung 32 kann wie ein herkömmlicher LIN-Transceiver für einen LIN-Slave ausgeführt sein. Die Einrichtung 33 dient zum Regeln des Sendesignals TX (vgl. Fig. 6) für das Bussystem 1, um die Anforderungen in Bezug auf Emission und Timing zu erfüllen, wie zuvor bereits erwähnt und später noch ausführlicher beschrieben.

Fig. 2 zeigt die Sende-/Empfangseinrichtung 12 genauer. Die Sende-/Empfangseinrichtungen 22 sind jeweils auf die gleiche Weise aufgebaut wie die Sende-/Empfangseinrichtung 12, so dass auch für die Sende-/Empfangseinrichtungen 22 auf die nachfolgende Beschreibung der Sende-/Empfangseinrichtung 12 verwiesen wird.

Gemäß Fig. 2 hat die Sende-/Empfangseinrichtung 12 eine Pull-Up-Einheit 121, eine Wake-Up-Einheit 122, eine ESD-Schutzeinheit 123, eine als LIN-Diode ausführbare Verpoldiode 124, einen LIN-Treiber 125, eine LIN-Empfangseinheit 126, eine LIN-Flankensteuereinheit 127, ein Filter 128, eine Einheit 129, eine erste Erfassungseinheit 131, eine zweite Erfassungseinheit 132 und eine Regeleinheit 133. Die Einheiten 121 bis 129 haben dieselben Funktionen wie entsprechende Einheiten 121 bis 129 eines herkömmlichen LIN-Transceivers. Die Sende-/Empfangseinrichtung 12 wird bei entsprechender Ansteuerung über Anschlüsse 51, 52 von der Wake-Up-Einheit 122 und der LIN-Empfangseinheit 126 von einer Spannungsquelle 50 mit Hilfe der Anschlüsse 53 bis 55 mit Spannung versorgt, um Signale vom Bus 40 zu empfangen, oder in einen sogenannten Schlafzustand versetzt. An dem Anschluss 52, dem Ausgang der als Empfangskomparator ausgeführten LIN-Empfangseinheit 126, wird ein vom Bus 40 empfangenes Signal RXLin oder Empfangssignal RX an die Kommunikationssteuereinrichtung 11 weitergegeben. Zudem verfügt die Sende-/Empfangseinrichtung 12 über weitere Versorgungsanschlüsse 56 bis 58, die wie die Anschlüsse 51 bis 55, gleich den Anschlüssen eines herkömmlichen LIN-Transceivers sind und daher hier nicht weiter erläutert sind.

An einem Anschluss 61 (LINBus) ist die Sende-/Empfangseinrichtung 12 an den Bus 40 angeschlossen. An einem Anschluss 62 (LinGND) ist die Sende-/Empfangseinrichtung 12 an die Masse des Busses 40 angeschlossen. An einem Eingang 63 wird ein Sendesignal TX (vgl. Fig. 6) von der Kommunikationssteuereinrichtung 11 in die Sende-/Empfangseinrichtung 12 eingespeist. Über den Eingang 64 kann das Signal TX_{AUS} (TX_{OFF}) eingespeist werden. Am Eingang 65 wird das von der Regeleinheit 133 geregelte Sendesignal TX eingegeben. Die anderen Eingänge 66 bis 72 sind gleich den herkömmlichen Eingängen und sind daher hier nicht näher erläutert.

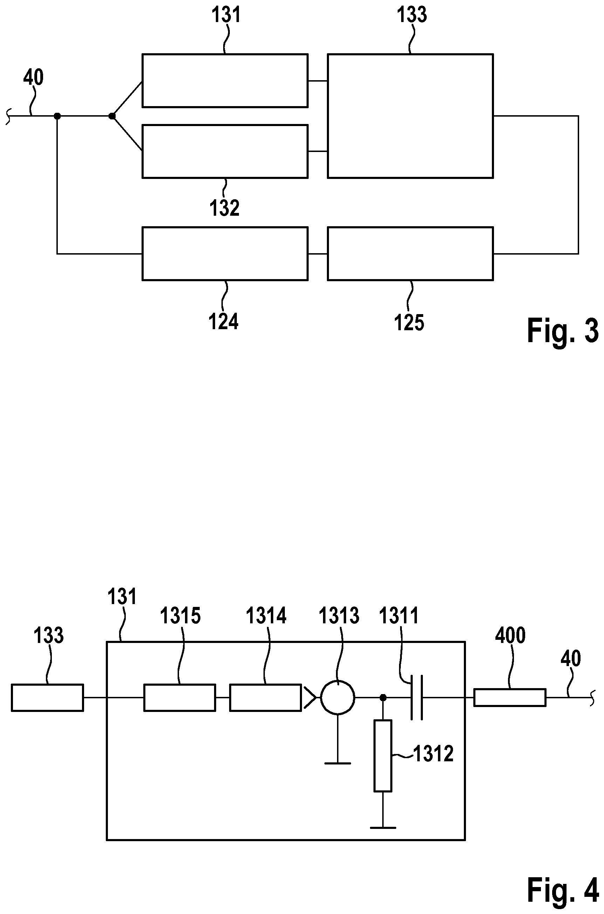

Fig. 3 zeigt die Anordnung der ersten und zweiten Erfassungseinheit 131, 132 und der Regeleinheit 133 in einem Regeldiagramm gemäß dem ersten Ausführungsbeispiel. Die Einrichtung 33 der Teilnehmerstation 30 umfasst ebenfalls eine erste und zweite Erfassungseinheit 131, 132 und eine Regeleinheit 133. Dadurch weist auch die Einrichtung 33 der Teilnehmerstation 30 die nachfolgend beschriebenen Funktionen der ersten und zweiten Erfassungseinheit 131, 132 und der Regeleinheit 133 auf.

Gemäß Fig. 3 sind die erste und zweite Erfassungseinheit 131, 132 jeweils an den Bus 40 angeschlossen. Der ersten Erfassungseinheit 131 ist die Regeleinheit 133 nachgeschaltet. Ebenso ist der zweiten Erfassungseinheit 132 die Regeleinheit 133 nachgeschaltet. Die Ausgänge der ersten und zweiten Erfassungseinheit 131, 132 sind also an zwei separaten Eingängen der Regeleinheit 133 angeschlossen. Der Regeleinheit 133 und somit auch den Erfassungseinheiten 131, 132 ist der LIN-Treiber 125 nachgeschaltet. Dem LIN-Treiber 125 ist die Verpoldiode 124 nachgeschaltet.

Fig. 4 zeigt den Aufbau der ersten Erfassungseinrichtung 131 zur Erfassung von Emission genauer. Die erste Erfassungseinrichtung 131 hat ein Auskoppelnetzwerk, das eine Koppelkapazität 1311, einen Widerstand 1312 und einen Auskoppelpunkt 1313 aufweist, ein Verstärkungsmodul 1314 und ein Integrations- oder Amplitudenerfassungsmodul 1315. Die erste Erfassungseinrichtung 131 kann mit dem Auskoppelnetzwerk die leitungsgebundene Emission der Sende-/Empfangseinrichtung 12 qualitativ entsprechend der 150 Ohm-Methode gemäß der IEC 61967-4 erfassen.

Im Betrieb dient die Koppelkapazität 131 auf dem Bus 40 zur Erfassung von Störungen durch die Schaltvorgänge und damit der durch die Störungen verursachten Emission. Mit dem Verstärkungsmodul 1314 wird die am Auskoppelpunkt 1313 erfasste Störung verstärkt. Mit dem Integrations- oder Amplitudenerfassungsmodul 1315, das dem Verstärkungsmodul 1314 nachgeschaltet ist, wird die erfasste und vom Verstärkungsmodul 1314 verstärkte Störung über der Zeit t aufintegriert. Alternativ oder zusätzlich kann das Integrations- oder Amplitudenerfassungsmodul 1315 auch die Amplitude der Störung erfassen.

Die Regeleinheit 133 entscheidet dann, beispielsweise durch Vergleich des vom Integrations- oder Amplitudenerfassungsmodul 1315 ausgegebenen Werts, ob der zu betrachtende vorbestimmte Schwellwert 90, 91 für die Emission überschritten ist oder nicht. Die Schwellwerte 90, 91 sind in Fig. 5 an einem speziellen Beispiel gezeigt.

Fig. 5 zeigt ein die Grenzwerte für ein am Auskoppelpunkt 1313 erfasstes Frequenzspektrum der Frequenz F, wobei auf der vertikalen Achse in Fig. 5 die Emission in dBµV aufgetragen ist. In Fig. 5 ist der vorbestimmte Schwellwert 90 ein Schwellwert bei dem LIN-Bussystem ohne kapazitive Buslast. Der vorbestimmte Schwellwert 91 ist ein Schwellwert bei dem LIN-Bussystem mit kapazitiver Buslast.

Ist der vorbestimmte Schwellwert 90 oder 91 für die Emission überschritten, führt die Regeleinheit 133 einen Regeleingriff durch, um die Emission unter den vorbestimmten Schwellwert 90, 91 zu regeln. Dies ist anhand der Fig. 6 bis 9 nachfolgend näher erläutert.

Fig. 6 zeigt den Verlauf des Sendesignals TX über der Zeit t, wie es an der sendenden Teilnehmerstation 10 von der Kommunikationssteuereinrichtung 11 am Eingang 63 der Sende-/Empfangseinrichtung 12 eingegeben wird. Das Sendesignal TX ist ein Rechtecksignal mit einem rezessiven Pegel 85 und einem dominanten Pegel 86. In Fig. 6 ist als Beispiel nur ein Übergang des Sendesignals TX vom rezessiven Pegel 85 zu dem dominanten Pegel 86 bei der Zeit t0 gezeigt.

Fig. 7 zeigt den Spannungsverlauf des aus dem Sendesignal TX von Fig. 6 resultierenden Bussignals 45. Die als Komparator ausgeführte zweite Erfassungseinheit 132 prüft mittels zweier Komparatorschwellen während der Schaltflanke des Bussignals 45, ob die geforderte Flankensteilheit des Bussignals 45 erreicht ist. Hierbei vergleicht die zweite Erfassungseinheit 132 bei der Zeit t1 die dem Bussignal 45 entsprechende Busspannung Vs mit einem oberen Schwellwert 95. Bei der Zeit t2 vergleicht die zweite Erfassungseinheit 132 die dem Bussignal 45 entsprechende Busspannung Vs mit einem unteren Schwellwert 96. Ist die Flankensteilheit in Ordnung, wird bei der Zeit t1 der obere Schwellwert 95 unterschritten und bei der Zeit t2 der untere Schwellwert 96 unterschritten. Geht das Sendesignal TX dagegen bei der Zeit t0 vom dominanten Pegel 86 zu dem rezessiven Pegel 85 über, so ist die Flankensteilheit in Ordnung, wenn bei der Zeit t1 der untere Schwellwert 95 überschritten und bei der Zeit t2 der obere Schwellwert 95 überschritten wird. Die Flankensteilheit ist jedoch nicht in Ordnung, wenn beide Schwellwerte 95, 96 bei der Zeit t1 unter- oder überschritten sind.

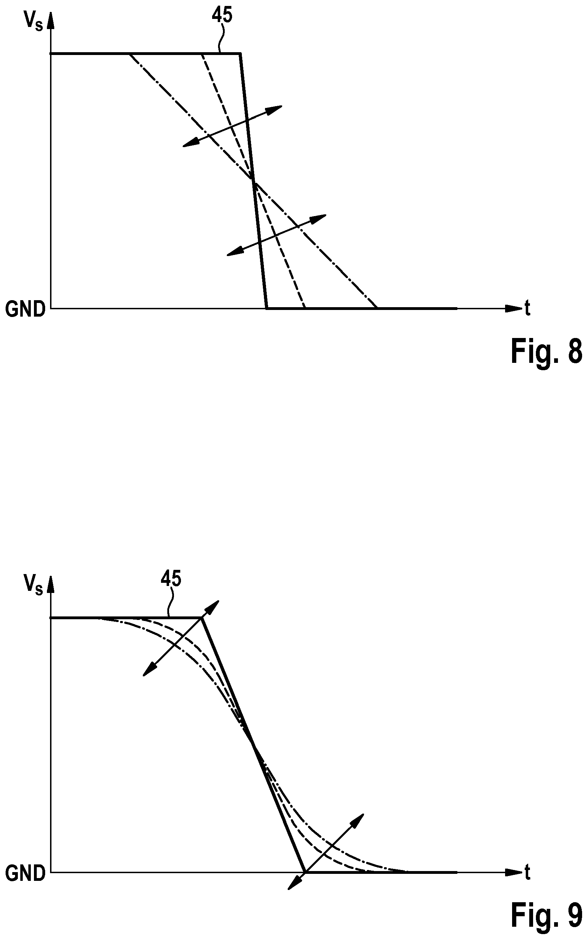

Die Regeleinheit 133 führt eine Gewichtung der von den Erfassungseinheiten 131, 132 erfassten Größen durch. Je nach Ergebnis regelt die Regeleinheit 133 die Flankensteilheit, wie in Fig. 8 veranschaulicht, um die durch die Schwellwerte 95, 96 vorgegebenen Grenzen einzuhalten, und/oder die Flankenform wie in Fig. 9 veranschaulicht, um die Grenzwerte für die Emission einzuhalten.

Die Flankensteilheit und/oder die Flankenform des Bussignals 45 aufgrund des Sendesignals TX werden von einer Regelung der Regeleinheit 133 so eingestellt, dass möglichst geringe Störungen durch die Schaltvorgänge auftreten, was optimal für die Einhaltung der Emissionsgrenzwerte ist. Mit Hilfe der zweiten Erfassungseinheit 132 wird jeweils geprüft, dass die Flankensteilheit des Bussignals 45 aufgrund des Sendesignals TX nicht unter die geforderten Grenzwerte aus der Timing-Spezifikation für das Bussystem 1 fällt. Sollte dies der Fall sein, wird die Flankensteilheit oder Flankenform solange um eine Schrittweite nach oben korrigiert, bis die Timing-Spezifikation für das Bussystem 1 erfüllt ist. Die Mechanismen sind sowohl für eine steigende als auch für eine fallende Flanke vorhanden und regeln die Größen bei Bedarf zu jeder Flanke des Sendesignals TX.

Somit führt die Sende-Empfangseinrichtung 12 der Teilnehmerstation 10, wie auch die Sende-Empfangseinrichtungen 22 der Teilnehmerstationen 20 und die Einrichtung 33 ein Regelverfahren durch, welches im Normalbetrieb der Kommunikation auf dem Bussystem 1 arbeitet. Die Regelung ist in der Lage, sowohl Flankensteilheit als auch Flankenform so zu verändern, dass die Emission reduziert wird und trotzdem die Timing-Anforderungen für das Bussystem 1 erfüllt werden können. Dabei wird eine entsprechende feine Granularität der Schrittweiten für die Einstellung von Flankensteilheit und Flankenform verwendet.

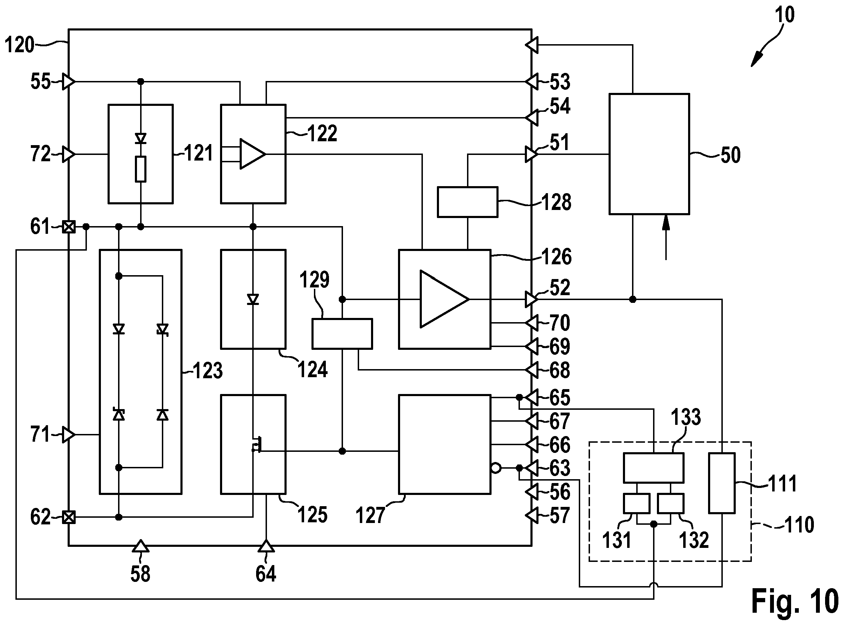

Fig. 10 zeigt eine Teilnehmerstation 10 gemäß einem zweiten Ausführungsbeispiel. Hier sind die erste und zweite Erfassungseinheit 131, 132 und die Regeleinheit 133 Teil einer Kommunikationssteuereinrichtung 110. Die Kommunikationssteuereinrichtung 110 hat zudem eine Einheit 111, welche die Funktionen einer herkömmlichen LIN-Kommunikationssteuereinrichtung, also einer Kommunikationssteuereinrichtung 11 aufweist. Eine Sende-/Empfangseinrichtung 120 ist dagegen aufgebaut wie eine herkömmliche LIN-Sende-/Empfangseinrichtung. Ansonsten ist die Teilnehmerstation 10 gemäß dem vorliegenden Ausführungsbeispiel aufgebaut wie die Teilnehmerstation 10 gemäß dem ersten Ausführungsbeispiel.

Gemäß einer Modifikation des vorliegenden Ausführungsbeispiels ist nur die Regeleinheit 133 Teil der Kommunikationssteuereinrichtung 110. Die erste und zweite Erfassungseinheit 131, 132 sind dagegen Teile der Sende-/Empfangseinheit 120. Es sind selbstverständlich auch andere Zuordnungen der ersten und zweiten Erfassungseinheit 131, 132 und der Regeleinheit 133 zu der Kommunikationssteuereinrichtung 110 und der Sende-/Empfangseinrichtung 120 möglich.

Alle zuvor beschriebenen Ausgestaltungen des Bussystems 1 der Teilnehmerstationen 10, 20, 30 und des Verfahrens gemäß dem ersten und zweiten Ausführungsbeispiel und deren Modifikationen können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem LIN-Protokoll basierenden Bussystems beschrieben. Das Bussystem 1 kann jedoch auch ein anderes Bussystem sein.

Wie zuvor beschrieben, lässt sich die Funktionalität der zuvor beschriebenen Ausführungsbeispiele in einem Transceiver bzw. einer Sende-/Empfangseinrichtung 12 oder einem LIN-Transceiver oder einem Transceiver-Chipsatz oder einem LIN-Transceiver-Chipsatz oder auch in der Kommunikationssteuereinrichtung 11, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

Nach dazu ist es möglich, dass die Teilnehmerstationen 10, 20, 30 und des Verfahrens gemäß dem ersten und zweiten Ausführungsbeispiel und deren Modifikationen zusätzlich ergänzt sind durch ein Verfahren zum Regeln eines Timings eines Sendesignals für ein Bussystem, um auch die Anforderungen in Bezug auf das Tastverhältnis (duty cycle) zu erfüllen. Hierbei können die Teilnehmerstationen 10, 20, 30 ein Verfahren zum Regeln eines Timings eines Sendesignals für ein Bussystem ausführen, das die Schritte umfasst: Erfassen, mit einer Erfassungseinheit, einer Bitbreite von empfangenen Bits einer über einem Bus des Bussystems gesendeten Nachricht, Ermitteln, mit einer Regeleinheit, der Bitbreite von mindestens einem Bit einer zu sendenden Nachricht, um die Bussystem-Anforderungen an das Tastverhältnis zu erfüllen, und Regeln, mit der Regeleinheit, der Bitbreite eines der zu sendenden Nachricht entsprechenden Signals durch Verzögerung der Flanken des der Nachricht entsprechenden Sendesignals auf der Grundlage der von der Erfassungseinheit erfassten Bitbreite. Dieses Verfahren ist in einer weiteren Anmeldung der Anmelderin der vorliegenden Erfindung näher beschrieben.

## Patentansprüche

1. Teilnehmerstation (10) für ein Bussystem (1), mit
einer ersten Erfassungseinheit (131), die an einen Bus (40) des Bussystems (1) anschließbar ist, zur Erfassung eines Maßes für eine Emission/Abstrahlung durch Schaltvorgänge aufgrund einer auf den Bus (40) gesendeten Nachricht (41),
einer zweiten Erfassungseinheit (132), die an den Bus (40) anschließbar ist, zur Erfassung einer Flankensteilheit von Schaltflanken aufgrund der Schaltvorgänge eines Bussignals (45), das aus der auf den Bus (40) gesendeten Nachricht (41) resultiert, und
einer Regeleinheit (133), welche der ersten Erfassungseinheit (131) und der zweiten Erfassungseinheit (132) nachgeschaltet ist, zur Regelung der Flankensteilheit und/oder einer Flankenform der auf den Bus (40) gesendeten Nachricht (41) auf der Grundlage eines Erfassungsergebnisses der ersten Erfassungseinheit (131) und eines Erfassungsergebnisses der zweiten Erfassungseinheit (132), um die von der ersten Erfassungseinheit (131) erfasste Emission/Abstrahlung durch Schaltvorgänge aufgrund der auf den Bus (40) gesendeten Nachricht (41) zu minimieren und die Anforderungen des Bussystems (1) an ein Timing der Nachricht (41) zu erfüllen, das durch Grenzwerte für die Flankensteilheit des Bussignals (45) aus einer Timing-Spezifikation für das Bussystem (1) vorgegeben ist.

2. Teilnehmerstation (10) nach Anspruch 1,
zudem mit einer Sende-/Empfangseinrichtung (12; 120) zum Senden und/oder Empfangen von Nachrichten (41, 42, 43, 44),
wobei die erste und zweite Erfassungseinheit (131, 132) ausgestaltet sind, die Emission/Abstrahlung und die Flankensteilheit zu erfassen, während die Sende-/Empfangseinrichtung (12; 120) eine Nachricht (41) sendet.

3. Teilnehmerstation (10) nach Anspruch 1 oder 2, wobei die erste Erfassungseinheit (131) eine Koppelkapazität (1311) auf einem Bus (40) des Bussystems (1) aufweist, um die Störung zu erfassen.

4. Teilnehmerstation nach einem der vorangehenden Ansprüche, wobei die erste Erfassungseinheit (131) zudem ausgestaltet ist, nach Erfassung einer Störung, die erfasste Störung zu verstärken, die verstärkte Störung zu integrieren oder eine Amplitudenerfassung der verstärkten Störung vorzunehmen.

5. Teilnehmerstation nach einem der vorangehenden Ansprüche, wobei die zweite Erfassungseinheit (132) als Komparator mit zwei Komparatorschwellen zum Prüfen, ob die Flankensteilheit einem vorbestimmten Wert entspricht, ausgestaltet ist.

6. Teilnehmerstation (10) nach einem der vorangehenden Ansprüche, wobei die Teilnehmerstation (10) zum Senden und/oder Empfangen von Nachrichten (41) gemäß dem Local-Interconnect-Network-Standard ausgestaltet ist.

7. Teilnehmerstation (10) nach einem der vorangehenden Ansprüche, zudem mit einer Kommunikationssteuereinrichtung (11; 110) zum Erstellen oder Lesen einer Nachricht (41) für eine oder von einer weiteren Teilnehmerstation (20, 30) des Bussystems (1).

8. Teilnehmerstation (10) nach Anspruch 7, wobei die erste und zweite Erfassungseinheit (131, 132) und/oder die Regeleinheit (133) Teil der Kommunikationssteuereinrichtung (110) oder Teil der Sende-/Empfangseinrichtung (12) sind.

9. Local-Interconnect-Network-Bussystem (1), mit
einem Bus (40), und
einer ersten Teilnehmerstation (10) als Master und mindestens einer zweiten Teilnehmerstation (20, 30) als Slave, welche über den Bus (40) derart miteinander verbunden sind, dass sie miteinander kommunizieren können,
wobei die erste Teilnehmerstation (10) und die mindestens eine zweite Teilnehmerstation (20, 30) eine Teilnehmerstation nach einem der vorangehenden Ansprüche sind.

10. Verfahren zum Regeln eines Sendesignals (TX) für ein Bussystem (1), mit den Schritten
Erfassen, mit einer ersten, an einen Bus (40) des Bussystems (1) angeschlossenen Erfassungseinheit (131), eines Maßes für eine Emission/Abstrahlung durch Schaltvorgänge aufgrund einer auf den Bus (40) gesendeten Nachricht (41),
Erfassen, mit einer zweiten, an den Bus (40) angeschlossenen Erfassungseinheit (132), einer Flankensteilheit von Schaltflanken aufgrund der Schaltvorgänge eines Bussignals (45), das aus der auf den Bus (40) gesendeten Nachricht (41) resultiert, und
Regeln, mit einer der ersten Erfassungseinheit (131) und der zweiten Erfassungseinheit (132) nachgeschalteten Regeleinheit (133), welche ist, der Flankensteilheit und/oder einer Flankenform der auf den Bus (40) gesendeten Nachricht (41) auf der Grundlage eines Erfassungsergebnisses der ersten Erfassungseinheit (131) und eines Erfassungsergebnisses der zweiten Erfassungseinheit (132), um die von der ersten Erfassungseinheit (131) erfasste Emission/Abstrahlung durch Schaltvorgänge aufgrund der auf den Bus (40) gesendeten Nachricht (41) zu minimieren und die Anforderungen des Bussystems (1) an ein Timing der Nachricht (41) zu erfüllen, das durch Grenzwerte für die Flankensteilheit des Bussignals (45) aus einer Timing-Spezifikation für das Bussystem (1) vorgegeben ist.

## Claims

1. Subscriber station (10) for a bus system (1), having
a first capture unit (131), which can be connected to a bus (40) of the bus system (1), for capturing a degree of emission/radiation caused by switching operations on account of a message (41) transmitted onto the bus (40),
a second capture unit (132), which can be connected to the bus (40), for capturing an edge steepness of switching edges on account of the switching operations of a bus signal (45) which results from the message (41) transmitted onto the bus (40), and
a regulating unit (133), which is connected downstream of the first capture unit (131) and the second capture unit (132), for regulating the edge steepness and/or an edge shape of the message (41) transmitted onto the bus (40) on the basis of a capture result of the first capture unit (131) and a capture result of the second capture unit (132) in order to minimize the emission/radiation caused by switching operations, as captured by the first capture unit (131), on account of the message (41) transmitted onto the bus (40) and to meet the requirements of the bus system (1) with respect to a timing of the message (41), which timing is predefined by limit values for the edge steepness of the bus signal (45) from a timing specification for the bus system (1).

2. Subscriber station (10) according to Claim 1,
also having a transmitting/receiving device (12; 120) for transmitting and/or receiving messages (41, 42, 43, 44),
wherein the first and second capture units (131, 132) are configured to capture the emission/radiation and the edge steepness while the transmitting/receiving device (12; 120) is transmitting a message (41).

3. Subscriber station (10) according to Claim 1 or 2, wherein the first capture unit (131) has a coupling capacitance (1311) on a bus (40) of the bus system (1) in order to capture the interference.

4. Subscriber station according to one of the preceding claims, wherein the first capture unit (131) is also configured, after capturing interference, to amplify the captured interference, to integrate the amplified interference or to capture the amplitude of the amplified interference.

5. Subscriber station according to one of the preceding claims, wherein the second capture unit (132) is in the form of a comparator having two comparator thresholds for checking whether the edge steepness corresponds to a predetermined value.

6. Subscriber station (10) according to one of the preceding claims, wherein the subscriber station (10) is configured to transmit and/or receive messages (41) according to the Local Interconnect Network standard.

7. Subscriber station (10) according to one of the preceding claims, also having a communication control device (11; 110) for creating or reading a message (41) for one subscriber station or from a further subscriber station (20, 30) of the bus system (1).

8. Subscriber station (10) according to Claim 7, wherein the first and second capture units (131, 132) and/or the regulating unit (133) is/are part of the communication control device (110) or part of the transmitting/receiving device (12).

9. Local Interconnect Network bus system (1) having
a bus (40), and
a first subscriber station (10) as the master and at least one second subscriber station (20, 30) as the slave, which are connected to one another via the bus (40) in such a manner that they can communicate with one another,
wherein the first subscriber station (10) and the at least one second subscriber station (20, 30) are a subscriber station according to one of the preceding claims.

10. Method for regulating a transmission signal (TX) for a bus system (1), having the steps of
capturing, using a first capture unit (131) connected to a bus (40) of the bus system (1), a degree of emission/radiation caused by switching operations on account of a message (41) transmitted onto the bus (40),
capturing, using a second capture unit (132) connected to the bus (40), an edge steepness of switching edges on account of the switching operations of a bus signal (45) which results from the message (41) transmitted onto the bus (40), and
regulating, using a regulating unit (133) connected downstream of the first capture unit (131) and the second capture unit (132), the edge steepness and/or an edge shape of the message (41) transmitted onto the bus (40) on the basis of a capture result of the first capture unit (131) and a capture result of the second capture unit (132) in order to minimize the emission/radiation caused by switching operations, as captured by the first capture unit (131), on account of the message (41) transmitted onto the bus (40) and to meet the requirements of the bus system (1) with respect to a timing of the message (41), which timing is predefined by limit values for the edge steepness of the bus signal (45) from a timing specification for the bus system (1).

## Revendications

1. Station d'abonné (10) pour un système de bus (1), comprenant
une première unité de détection (131), qui peut être connectée à un bus (40) du système de bus (1), destinée à détecter une mesure pour une émission/un rayonnement par des opérations de commutation en raison d'un message (41) envoyé sur le bus (40),
une deuxième unité de détection (132), qui peut être connectée au bus (40), destinée à détecter une pente de front des fronts de commutation en raison des opérations de commutation d'un signal de bus (45) qui résulte du message (41) envoyé sur le bus (40), et
une unité de régulation (133), laquelle est branchée en aval de la première unité de détection (131) et de la deuxième unité de détection (132), destinée à réguler la pente de front et/ou une forme de front du message (41) envoyé sur le bus (40) sur la base d'un résultat de détection de la première unité de détection (131) et d'un résultat de détection de la deuxième unité de détection (132), afin de réduire au minimum l'émission/le rayonnement, détecté par la première unité de détection (131), par les opérations de commutation en raison du message (41) envoyé sur le bus (40) et satisfaire aux exigences du système de bus (1) en matière de cadencement du message (41), lequel est prédéfini par des valeurs limites pour la pente de front du signal de bus (45) à partir d'une spécification de cadencement pour le système de bus (1).

2. Station d'abonné (10) selon la revendication 1, comprenant en outre un dispositif d'émission/réception (12 ; 120) destiné à émettre et/ou à recevoir des messages (41, 42, 43, 44),
la première et la deuxième unité de détection (131, 132) étant configurées pour détecter l'émission/le rayonnement et la pente de front pendant que le dispositif d'émission/réception (12 ; 120) émet un message (41).

3. Station d'abonné (10) selon la revendication 1 ou 2, la première unité de détection (131) possédant une capacité de couplage (1311) sur un bus (40) du système de bus (1) afin de détecter la perturbation.

4. Station d'abonné (10) selon l'une des revendications précédentes, la première unité de détection (131) étant en outre configurée pour, après la détection d'une perturbation, amplifier la perturbation détectée, intégrer la perturbation amplifiée ou effectuer une détection d'amplitude de la perturbation amplifiée.

5. Station d'abonné selon l'une des revendications précédentes, la deuxième unité de détection (132) étant configurée sous la forme d'un comparateur avec deux seuils de comparaison, destiné à vérifier si la pente de front correspond à une valeur prédéterminée.

6. Station d'abonné (10) selon l'une des revendications précédentes, la station d'abonné (10) étant configurée pour émettre et/ou recevoir des messages (41) conformément à une norme de réseau d'interconnexion local.

7. Station d'abonné (10) selon l'une des revendications précédentes, comprenant en outre un dispositif de commande de communication (11 ; 110) destiné à créer ou à lire un message (41) pour une ou plusieurs stations d'abonné (20, 30) supplémentaires du système de bus (1).

8. Station d'abonné (10) selon la revendication 7, la première et la deuxième unité de détection (131, 132) et/ou l'unité de régulation (133) faisant partie du dispositif de commande de communication (110) ou faisant partie du dispositif d'émission/réception (12).

9. Système de bus de réseau d'interconnexion local (1), comprenant
un bus (40), et
une première station d'abonné (10) en tant que maître et au moins une deuxième station d'abonné (20, 30) en tant qu'esclave, lesquelles sont connectées les unes aux autres par le biais du bus (40) de telle sorte qu'elles peuvent communiquer entre elles,
la première station d'abonné (10) et l'au moins une deuxième station d'abonné (20, 30) étant des stations d'abonné selon l'une des revendications précédentes.

10. Procédé de régulation d'un signal émis (TX) pour un système de bus (1), comprenant les étapes de détection, avec une première unité de détection (131) connectée à un bus (40) du système de bus (1), d'une mesure pour une émission/un rayonnement par des opérations de commutation en raison d'un message (41) envoyé sur le bus (40),
détection, avec une deuxième unité de détection (132) connectée au bus (40), d'une pente de front de front de commutation en raison des opérations de commutation d'un signal de bus (45) qui résulte du message (41) envoyé sur le bus (40), et
régulation, avec une unité de régulation (133) branchée en aval de la première unité de détection (131) et de la deuxième unité de détection (132), de la pente de front et/ou d'une forme de front du message (41) envoyé sur le bus (40) sur la base d'un résultat de détection de la première unité de détection (131) et d'un résultat de détection de la deuxième unité de détection (132), afin de réduire au minimum l'émission/le rayonnement, détecté par la première unité de détection (131), par les opérations de commutation en raison du message (41) envoyé sur le bus (40) et satisfaire aux exigences du système de bus (1) en matière de cadencement du message (41), lequel est prédéfini par des valeurs limites pour la pente de front du signal de bus (45) à partir d'une spécification de cadencement pour le système de bus (1).
